# EUROPEAN PATENT APPLICATION

(11) **EP 3 675 422 A1**
(43) Date of publication of application: **01.07.2020**
(21) Application number: 18870403.5
(22) Date of filing: 11.09.2018
(51) Int. Cl.: H04L 12/24

(54) **NETWORK CONTROL METHOD AND DEVICE AND COMPUTER READABLE STORAGE MEDIUM**

(30) Priority: 25.10.2017 CN 201711014177
(71) Applicant: ZTE Corporation, Shenzhen, Guangdong 518057 (CN)
(72) Inventor: LIN, Ning, Shenzhen Guangdong 518057 (CN)
(74) Representative: Baudler, Ron
(86) International application number: PCT/CN2018/105115
(87) International publication number: WO 2019/080658

(57) **Abstract**

The present disclosure discloses a network control method, a network control device and a computer-readable storage medium, and the network control method includes detecting, by a device, a reporting rate of a Media Access Control, MAC, address, and configuring, by the device, to discard a message whose source MAC address hits the MAC address when the reporting rate of the MAC address is greater than or equal to a preset rate threshold.

## Description

### CROSS REFERENCE TO RELATED APPLICATION

The present application is based on and claims the priority to Chinese Patent Application No. 201711014177.7, filed on October 25, 2017, the entire contents of which are incorporated herein by reference.

### TECHNICAL FIELD

The present disclosure relates to network technology, and in particular, to a network control method, a network control device, and a computer-readable storage medium.

### BACKGROUD

Generally, network devices mainly employ port loop detection or Spanning Tree Protocol (STP) to remove a loop.

However, the port loop detection currently employed by most devices may cause the following problems:
1. consumption of Central Processing Unit (CPU) is increased, because the CPU is supposed to send and receive loop detection messages.
2. whether there is a loop cannot be accurately determined, because, after a loop detection message is sent by a device, it is uncertain whether the loop detection message can be correctly recovered in the network due to the influence of a network environment.
3. when it is detected through the loop detection that there is a loop at an port, defensive operations generally performed are to shut down the port, or generate a tree-state block, but such defensive operations will directly affect the whole port, or all forwarding states of a forwarding-state port in a Virtual Local Area Network (VLAN).

The STP currently employed by most devices may cause the following problems:
1. the STP cannot calculate single-port loop states.
2. consumption of CPU is increased, because the STP leads to an increase in CPU computation.
3. the STP performs defensive blocking on a port based on a VLAN, and such defensive blocking will affect all forwarding behaviors of the port in the VLAN.

Therefore, in the existing art, the consumption of CPU may be increased no matter which method is used; all the defensive operations are performed on a port or a port in a VLAN, which will inevitably cut off all forwarding traffic of the port or the port in the VLAN; and it is likely that an existing loop in a network cannot be correctly detected no matter which method is used, for example, under the condition that the port loop detection message cannot be received, or that the STP cannot calculate the single-port loop states .

### SUMMARY

At least one embodiment of the present disclosure provides a network control method, a network control device, and a computer-readable storage medium.

At least one embodiment of the present disclosure provides a network control method, including:
detecting, by a device, a reporting rate of a Media Access Control (MAC) address, and configuring, by the device, to discard a message whose source MAC address hits the MAC address when the reporting rate of the MAC address is greater than or equal to a preset rate threshold.

An embodiment of the present disclosure provides a network control device, including a processor and a memory having a program stored therein which, when read and executed by the processor, causes the processor to:
detect a reporting rate of a MAC address, and configure to discard a message whose source MAC address hits the MAC address when the reporting rate of the MAC address is greater than or equal to a preset rate threshold.

An embodiment of the present disclosure provides a computer-readable storage medium having stored therein one or more programs which, when executed by one or more processors, cause the one or more processors to perform the above network control method.

Compared with the existing art, the network control method provided by the embodiment of the present disclosure performs system protection by using the MAC address to configure to discard a message whose source MAC address hits the MAC address, so that it does not lead to an increase in CPU usage caused by increasing too much message interactions of the CPU, and also avoids misjudgment caused under the condition that the detection message cannot be received due to the influence of the external environment; only by inhibiting forwarding of the MAC address in the device, abnormal traffic can be determined and defended against, without affecting other traffic forwarded through the port or the VLAN. By applying such method, loops can be processed in time with little pressure on the CPU of the device, that is, the influence on the network device can be minimized, and the device can be defended based on traffic.

The other features and advantages of the present disclosure will be set forth in the following description, and will partially become obvious through the description, or be known through the implementation of the present disclosure. The objectives and other advantages of the present disclosure may be realized and obtained by the structures particularly pointed out in the description, claims and drawings.

### BRIEF DESCRIPTION OF THE DRAWINGS

The accompanying drawings are intended to provide a further understanding of the technical solutions of the present disclosure, and are incorporated in and constitute a part of the specification. The drawings, together with the embodiments of the present disclosure, are intended to explain the technical solutions of the present disclosure.
Fig. 1 is a flowchart illustrating a network control method according to an embodiment of the present disclosure;
Fig. 2 is a block diagram of a network control device according to an embodiment of the present disclosure;
Fig. 3 is a flowchart illustrating a network control method according to an embodiment of the present disclosure;
Fig. 4 is a flowchart illustrating a network control method according to an embodiment of the present disclosure;
Fig. 5 is a schematic diagram of a switch loop according to an example of the present disclosure; and
Fig. 6 is a schematic diagram of a switch loop according to an example of the present disclosure.

### DETAILED DESCRIPTION

To make the objectives, technical solutions and advantages of the present disclosure more apparent, the embodiments of the present disclosure will be described in detail below with reference to the accompanying drawings. It should be noted that the embodiments and the features of the embodiments in the present disclosure may be arbitrarily combined with each other, if no conflict occurs.

The steps illustrated in the flowcharts of the drawings may be performed in a computer system such as a set of computer-executable instructions. Moreover, although a logical order is shown in the flowchart, the steps illustrated or described may be performed in an order different from that shown in the flowchart.

The main idea of the present disclosure is that: MAC address flapping normally happens when a Layer 2 loop occurs in a device, that is, a source MAC address of traffic forwarded by the device is continuously flapped between a normal receiving port and a looped port, and a rate of the MAC address flapping will be very fast when such a loop occurs. Therefore, the device receives a large number of flapping reports of the MAC address. In such case, the device can achieve device protection by writing a MAC address entry for the MAC address, and setting a behavior for the entry to discard a message if the source MAC address of the message hits the MAC address.

After setting the behavior to discard a message if the source MAC address of the message hits the MAC address, the device can judge based on traffic no matter the loop occurs in the device itself or at a far end of the network, determine that a loop of the traffic occurs so that it is unnecessary to perform normal MAC address learning, reporting and forwarding on the traffic, and at once set a behavior to discard a message if hitting the MAC address, so that the device directly discards the messages which hit the MAC address, and does not send the reports about the flapping of the MAC address to a CPU, thereby, on the one hand, preventing loop messages from impacting bandwidth of the port of the device, and on the other hand, preventing the MAC address flapping information of the loop messages from impacting the CPU of the device, that is, completing protection of a normal state of the device.

In addition, the defensive measures provided by the present disclosure are only directed at a MAC address, but are not directed at behaviors based on a port, or behaviors based on a port in a VLAN, so that the defensive measures only take effect on a behavior of hitting by a source MAC address of certain traffic, without affecting forwarding of other traffic through the port. Such defensive measures are advantageous, especially under the condition of a single-port loop. Under the condition of a single-port loop, it is likely that a loop of certain traffic occurs but other traffic is normal among all the traffic through the port. Under the protection by such defensive measures, the device can ensure normal forwarding of the other traffic to the greatest extent, and inhibit forwarding of the abnormal traffic and reporting of the MAC address flapping.

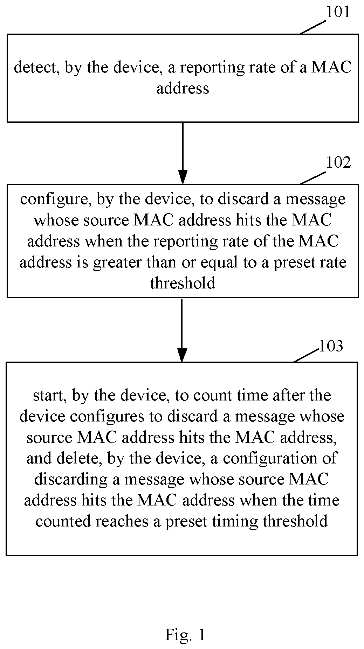

An embodiment of the present disclosure provides a network control method, as shown in Fig. 1, including steps 101 and 102.

In step 101, a reporting rate of a MAC address is detected by a device.

The reporting rates of respective MAC addresses are separately detected.

In step 102, the device configures to discard a message whose source MAC address hits the MAC address when the reporting rate of the MAC address is greater than or equal to a preset rate threshold.

In step 101, the reporting rate may be set according to a reporting rate of a MAC address when a loop actually occurs, and is set to be slightly smaller than the reporting rate of a MAC address when a loop actually occurs. The reporting rate may be set in other ways, such as being set according to network capacity.

The network control method provided by the embodiment can prevent flapping of a MAC address, a loop of which occurs, from impacting the CPU of the device, and can also prevent the messages with the MAC address from continuously impacting the bandwidth of the port. In addition, only the messages with the MAC address are discarded, while other messages through the port are not affected, which produces small influence on the port.

In an optional embodiment, the step of the device configuring to discard a message whose source MAC address hits the MAC address includes:
writing by the device the MAC address to a MAC address table or an Access Control List (ACL), and setting an action of discarding if a source MAC address hits the MAC address.

In an optional embodiment, the method further includes giving, by the device, an alarm of loop occurrence to a system when the reporting rate is greater than or equal to the preset rate threshold, with the alarm carrying the MAC address. The alarm can prompt a user to check network health and remove the loop in time.

In an optional embodiment, the method further includes:
step 103, starting to count time by the device after the device configures to discard a message whose source MAC address hits the MAC address, and deleting, by the device, the configuration of discarding a message whose source MAC address hits the MAC address when the time counted reaches a preset timing threshold.

Or, the configuration of discarding a message whose source MAC address hits the MAC address may be deleted after receiving a user instruction.

The preset timing threshold may be set as required.

In an optional embodiment, the method further includes detecting, by the device, a reporting rate of the MAC address after the device deletes the configuration of discarding a message whose source MAC address hits the MAC address, and configuring, by the device, to discard a message whose source MAC address hits the MAC address when the reporting rate is greater than or equal to the preset rate threshold.

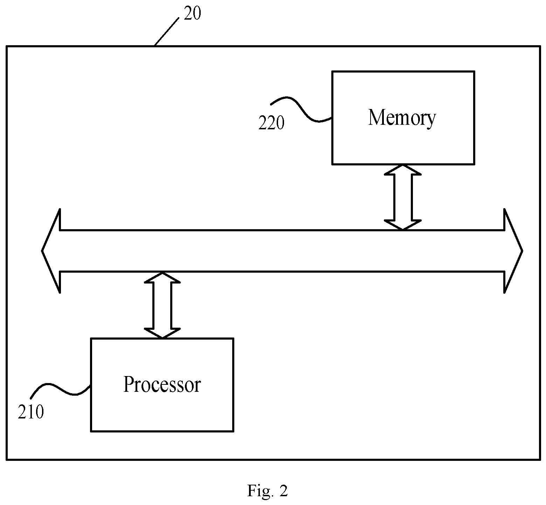

As shown in Fig. 2, an embodiment of the present disclosure provides a network control device 20, including a memory 210 and a processor 220, and the memory 210 stores a program, which is read and executed by the processor 220 to perform the above network control method.

An embodiment of the present disclosure provides a computer-readable storage medium that stores one or more programs, which can be executed by one or more processors to perform the above network control method.

The computer-readable storage medium includes any medium capable of storing program codes, such as a USB flash disk, a Read-Only Memory (ROM), a Random Access Memory (RAM), a mobile hard disk, a magnetic disk, or an optical disc.

The present disclosure is further illustrated by the following specific embodiments.

### Embodiment One

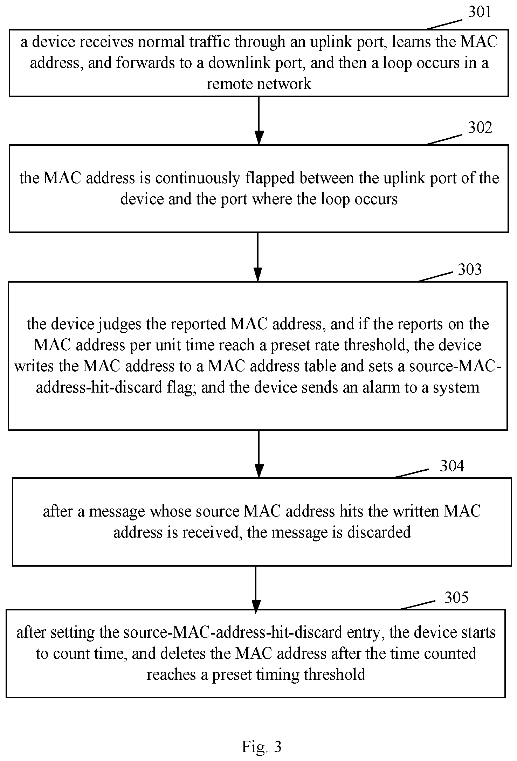

In this embodiment, a remote loop occurs at a single port of the device, as shown in Fig. 3, the method includes the following steps 301 to 305.

In step 301, a device receives normal traffic through an uplink port, learns the MAC address, and forwards to a downlink port, and then a loop occurs in a remote network.

In step 302, the MAC address is continuously flapped between the uplink port of the device and the port where the loop occurs.

In step 303, the device judges the reported MAC address, and if the reports on the MAC address per unit time (i.e., the reporting rate) reach a preset rate threshold (for example, greater than or equal to the preset rate threshold), the device writes the MAC address to a MAC address table and sets a source-MAC-address-hit-discard flag, that is, for any traffic that hits the MAC address, a message is discarded if the source MAC address thereof is the same as the MAC address entry; and the device sends an alarm to a system to warn it that a loop of the MAC address occurs in the device.

The preset rate threshold may be set according to the rate of sending a MAC address to the CPU when a loop occurs in the device, and is usually set to a value slightly less than the rate of sending a MAC address to the CPU when a loop actually occurs, or the preset rate threshold may be set by a user according to actual network fault tolerance.

In step 304, after a message whose source MAC address hits the written MAC address is received, the message is discarded, that is, the message, a loop of which occurs, is discarded, without further impacting the device.

In step 305, after setting the source-MAC-address-hit-discard entry, the device starts to count time, deletes the MAC address after the time counted reaches a preset timing threshold, that is, releasing the defense mechanism against the MAC address, and continues to detect a reporting rate of the MAC address when the MAC address is reported again; if the detected reporting rate is less than or equal to the preset rate threshold, which indicates that the loop of the traffic with the MAC address is removed, the traffic can be forwarded normally; if the detected reporting rate is larger than the preset rate threshold, which indicates that the loop still exists, the defense mechanism is started again, that is, the MAC address is written to the MAC address table, and a source-MAC-address-hit-discard flag is set.

It should be noted that, in this embodiment, detection of the reporting rate of the MAC address may be performed all the time and is not interrupted by whether the defense mechanism is started, but the MAC address being defended against will not be reported after the defense mechanism is started.

### Embodiment Two

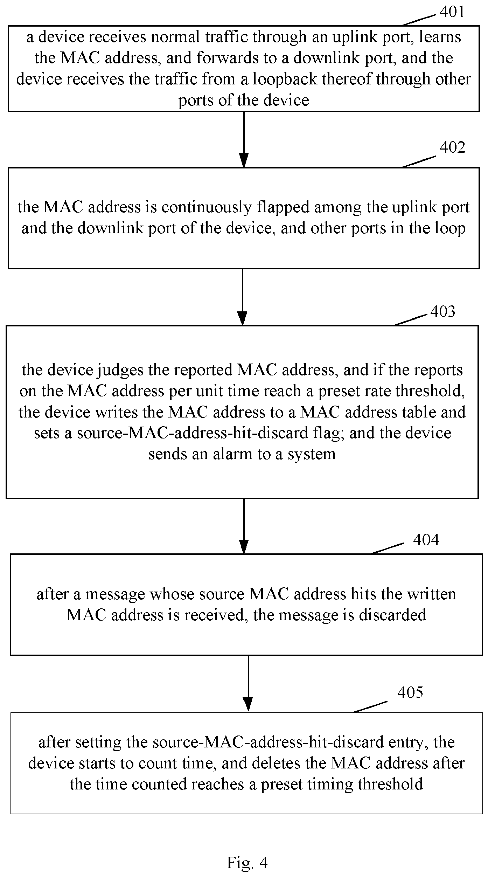

In this embodiment, a loop occurs among a plurality of ports of the device, as shown in Fig. 4, the method includes the following steps 401 to 405.

In step 401, a device receives normal traffic through an uplink port, learns the MAC address, and forwards to a downlink port, and the device receives the traffic from a loopback thereof through other ports of the device.

In step 402, the MAC address is continuously flapped among the uplink port and the downlink port of the device, and other ports in the loop.

In step 403, the device judges the reported MAC address, and if the reports on the MAC address per unit time (i.e., the reporting rate) reach a preset rate threshold (for example, greater than or equal to the preset rate threshold), the device writes the MAC address to a MAC address table and sets a source-MAC-address-hit-discard flag, that is, for any traffic that hits the MAC address, a message is discarded if the source MAC address thereof is the same as the MAC address entry; and the device sends an alarm to a system to warn it that a loop of the MAC address occurs in the device.

In step 404, after a message whose source MAC address hits the written MAC address is received, the message is discarded, that is, the message, a loop of which occurs, is discarded, without further impacting the device.

In step 405, after setting the source-MAC-address-hit-discard entry, the device starts to count time, deletes the MAC address after the time counted reaches a preset timing threshold, that is, releasing the defense mechanism against the MAC address, and continues to detect a reporting rate of the MAC address when the MAC address is reported again; if the detected reporting rate is less than or equal to the preset rate threshold, which indicates that the loop of the traffic with the MAC address is removed, the traffic can be forwarded normally; if the detected reporting rate is larger than the preset rate threshold, which indicates that the loop still exists, the defense mechanism is started again, that is, the MAC address is written to the MAC address table, and a source-MAC-address-hit-discard flag is set.

With the network control method provided by the above embodiment, a port loop can be determined without increasing excessive CPU consumption; whether there is a loop risk can be determined merely according to the times of MAC address flapping per unit time (i.e., the reporting rate), with no need to run a protocol or send a detection message; the user can be warned of the traffic, and a defense strategy can be immediately started to cut off the traffic that impacts the device abnormally; and detection of the loop state can be performed in time, so that the device will take the defensive measures again at once if the loop still exists after short impact, and the system can automatically return to normal without any human intervention.

As can be seen from the above description, the technical solution provided by the embodiment of the present disclosure performs system protection by using the MAC address to configure to discard if a source MAC address hits the MAC address, so that it does not lead to an increase in CPU usage caused by increasing too much message interactions of the CPU, and also avoids misjudgment caused under the condition that the detection message cannot be received due to the influence of the external environment; only by inhibiting forwarding of the MAC address in the device, abnormal traffic can be determined and defended against, without affecting other traffic forwarded through the port or the VLAN. By applying such technical solution, the influence on the network device can be minimized, and the device can be defended based on traffic.

In addition, the technical solution provided by the embodiment of the present disclosure can automatically remove the forwarding inhibition of the messages with the MAC address, and can warn the device of the abnormality of certain traffic, thereby improving maintainability and health of the network and fault tolerance of the device.

The present disclosure is further illustrated by the specific examples below.

### Example 1

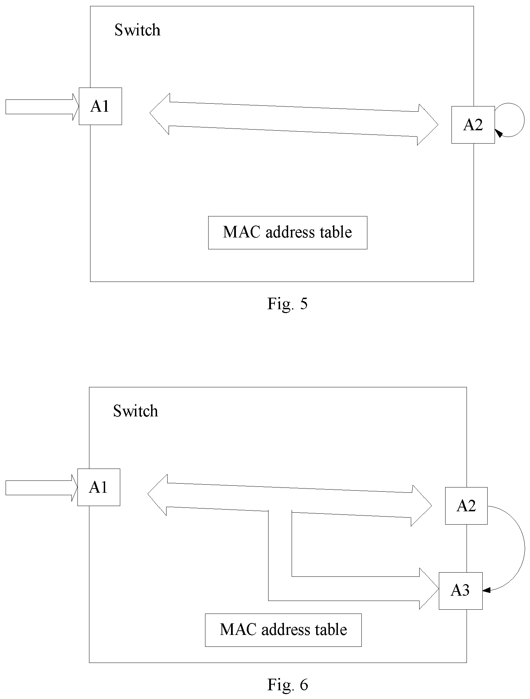

As shown in Fig. 5, in this example, for certain traffic of a switch A, the source MAC address of the traffic is 00:11:22:33:44:55 vlan10, an incoming port is A1, and an outgoing port is A2; a remote loop occurs at the port A2, so that the traffic with the MAC address is returned to the switch A through the loop; at this time, the ports A1 and A2 continuously receive messages whose source MAC addresses are 00:11:22:33:44:55 + vlan10, and thus continuously report on the learning of the MAC address.

The switch A receives a large number of reports on the same MAC address from different ports (for example, 100 reports of the same MAC address are received from different ports within one second), and determines that loop-induced MAC address flapping happens to the MAC address if a preset rate threshold is exceeded.

The switch A begins to take defensive measures to write the MAC address of 00:11:22:33:44:55 + vlan10 to a MAC address table, and to set the MAC address table entry to discard a message if the source MAC address of the message hits the MAC address. Simultaneously, an abnormal alarm of the MAC address is reported to a system.

Then, when the switch A receives a message with the source MAC address from the port A1 or A2 again, the message is directly discarded if it is matched with the MAC address table entry.

After a preset timing threshold (e.g. 5 minutes) passes, the switch A deletes the MAC address entry to discard if hitting the source MAC address of 00:11:22:33:44:55 + vlan10 from the MAC address table, that is, removing the defensive measures against the MAC address. At this time, if the loop fault of the switch is not eliminated, and the reporting rate of the MAC address reaches the preset rate threshold again (for example, 100 MAC address flapping entries are received within 1 second), the defensive measures are taken again to write an entry to discard a message if the source MAC address of the message hits the MAC address to the MAC address table. If the loop fault of the switch is eliminated and the reporting rate of the MAC address is less than the preset rate threshold, the traffic with the source MAC address can be normally forwarded.

### Example 2

As shown in Fig. 6, in this example, for certain traffic of a switch A, the source MAC address of the traffic is 00:11:22:33:44:55 vlan10, an incoming port is A1, and an outgoing port is A2; a loop occurs at the port A2 and a port A3 of the switch A, so that the traffic with the MAC address is returned to the switch A through the loop; at this time, the ports A1, A2 and A3 continuously receive messages whose source MAC addresses are 00:11:22:33:44:55 + vlan10, and thus continuously report on the learning of the MAC address.

The switch A receives a large number of reports on the same MAC address from different ports (for example, 100 reports of the same MAC address are received from different ports within one second), and determines that loop-induced MAC address flapping happens to the MAC address if a preset rate threshold is exceeded.

The switch A begins to take defensive measures to write the MAC address of 00:11:22:33:44:55 + vlan10 to a MAC address table, and to set the MAC address table entry to discard a message if the source MAC address of the message hits the MAC address. Simultaneously, an abnormal alarm of the MAC address is reported to a system.

Then, when the switch A receives a message of the source MAC address from the ports A1, A2 and A3 again, the message is directly discarded if it is matched with the MAC address table entry.

After a preset timing threshold (e.g. 5 minutes) passes, the switch A deletes the MAC address entry to discard if hitting the source MAC address of 00:11:22:33:44:55 + vlan10 from the MAC address table, that is, removing the defensive measures against the MAC address. At this time, if the loop fault of the switch is not eliminated, and the reporting rate of the MAC address reaches the preset rate threshold again (for example, 100 MAC address flapping entries are received within 1 second), the defensive measures are taken again to write an entry to discard a message if the source MAC address of the message hits the MAC address to the MAC address table. If the loop fault of the switch is eliminated and the reporting rate of the MAC address is less than the preset rate threshold, the traffic with the source MAC address can be normally forwarded.

### Example 3

In this example, a way of using ACL to implement defense is provided.

Similar to the scenarios in Examples 1 and 2, a loop happens to the traffic with the source MAC address of 00:11:22:33:44:55 vlan10, and the switch A determines that MAC address flapping occurs and the preset rate threshold is reached.

The switch A begins to take the defensive measures to set an ACL rule that hits the MAC address of 00:11:22:33:44:55 + vlan10 and sets an ACL packet dropping action, and to set the ACL rule to take effect on corresponding ports (for example, on the ports where the MAC address flapping occurs, or on all ports of the switch). An abnormal alarm of the MAC address is reported to a system.

After a preset timing threshold (e.g. 5 minutes) passes, the ACL rule is deleted. If the loop appears, and the reporting rate of the MAC address reaches the preset rate threshold again, the ACL rule is set again; and if the loop does not appear, and the device returns to normal, the traffic is forwarded.

As can be seen from the above technical solutions, compared with common loop suppression mechanisms for a device and system protection mechanisms, the method of performing system protection by using the MAC address to configure to discard a message whose source MAC address hits the MAC address does not lead to an increase in CPU usage caused by increasing too much message interactions of the CPU, and also avoids misjudgment caused under the condition that the detection message cannot be received due to the influence of the external environment; only by inhibiting forwarding of the MAC address in the device, abnormal traffic can be determined and defended against, without affecting other traffic forwarded through the port or the VLAN. By applying such method, the influence on the network device can be minimized, and the device can be defended based on traffic, automatically return to normal, and be warned of the abnormity of certain traffic, thereby improving the maintainability and health of the network and fault tolerance of the device.

The above embodiments disclosed in the present disclosure are merely for facilitating understanding the present disclosure, but are not intended to limit the present disclosure. Those skilled in the art can make any modification and change to the form and details of the embodiments without departing from the spirit and scope of the present disclosure, but the protection scope of the present disclosure should be subject to the scope of the appended claims.

## Claims

1. A network control method, comprising:
detecting, by a device, a reporting rate of a Media Access Control, MAC, address, and configuring, by the device, to discard a message whose source MAC address hits the MAC address when the reporting rate of the MAC address is greater than or equal to a preset rate threshold.

2. The network control method of claim 1, wherein the configuring, by the device, to discard a message whose source MAC address hits the MAC address comprises:
writing, by the device, the MAC address to a MAC address table or an Access Control List, and setting, by the device, an action of discarding if a source MAC address hits the MAC address.

3. The network control method of claim 1, further comprising: giving, by the device, an alarm of loop occurrence to a system when the reporting rate is greater than or equal to the preset rate threshold, with the alarm carrying the MAC address.

4. The network control method of any one of claims 1 to 3, further comprising:
starting, by the device, to count time after the device configures to discard a message whose source MAC address hits the MAC address, and deleting, by the device, a configuration of discarding a message whose source MAC address hits the MAC address when the time counted reaches a preset timing threshold.

5. The network control method of claim 4, further comprising:
detecting, by the device, a reporting rate of the MAC address after the device deletes the configuration of discarding a message whose source MAC address hits the MAC address, and configuring, by the device, to discard a message whose source MAC address hits the MAC address when the reporting rate is greater than or equal to the preset rate threshold.

6. A network control device, comprising a processor and a memory having a program stored therein which, when read and executed by the processor, causes the processor to:
detect a reporting rate of a MAC address, and configure to discard a message whose source MAC address hits the MAC address when the reporting rate of the MAC address is greater than or equal to a preset rate threshold.

7. The network control device of claim 6, wherein the configuring to discard a message whose source MAC address hits the MAC address comprises:
writing the MAC address to a MAC address table or an Access Control List, and setting an action of discarding if a source MAC address hits the MAC address.

8. The network control device of claim 6, wherein the processor reads and executes the program to:
give an alarm of loop occurrence to a system when the reporting rate is greater than or equal to the preset rate threshold, with the alarm carrying the MAC address.

9. The network control device of any one of claims 6 to 8, wherein the processor reads and executes the program to:
start to count time after configuring to discard a message whose source MAC address hits the MAC address, and delete a configuration of discarding a message whose source MAC address hits the MAC address when the time counted reaches a preset timing threshold.

10. The network control device of claim 9, wherein the processor reads and executes the program to:
detect a reporting rate of the MAC address after deleting the configuration of discarding a message whose source MAC address hits the MAC address, and configure to discard a message whose source MAC address hits the MAC address when the reporting rate is greater than or equal to the preset rate threshold.

11. A computer-readable storage medium having one or more programs stored therein which, when executed by one or more processors, cause the one or more processors to perform the network control method of any one of claims 1 to 5.
